# EUROPÄISCHE PATENTSCHRIFT

(11) **EP 0 622 278 B1**
(45) Veröffentlichungstag und Bekanntmachung des Hinweises auf die Patenterteilung: **24.07.1996**
(21) Anmeldenummer: 94105295.3
(22) Anmeldetag: 06.04.1994
(51) Int. Cl.: B60R 21/26, F42B 3/113, B60R 21/32

(54) **Rückhaltesystem für Fahrzeuginsassen**
Restraint system for vehicle passengers
Système de retenue pour passagers de véhicules

(30) Priorität: 26.04.1993 DE 4313571
(43) Veröffentlichungstag der Anmeldung: 02.11.1994
(73) Patentinhaber: TEMIC TELEFUNKEN microelectronic GmbH, 74072 Heilbronn (DE)
(72) Erfinder: Stückle, Gerd, D-71157 Hildrizhausen (DE)
(74) Vertreter: Maute, Hans-Jürgen, Dipl.-Ing.

(56) Entgegenhaltungen:
- US-A- 3 362 329
- US-A- 4 711 466
- PATENT ABSTRACTS OF JAPAN vol. 12, no. 18 (M-660) (2865) 20. Januar 1988 & JP-A-62 178 457 (NEC HOME ELECTRONICS LTD) 5. August 1987

## Beschreibung

Die Erfindung betrifft ein Rückhaltesystem für Fahrzeuginsassen gemäß dem Oberbegriff des Anspruchs 1, wie es aus der gattungsbildend zugrundegelegten JP 62-178 457 (A) als bekannt hervorgeht.

Die gattungsgemäß zugrundegelegte JP 62-178 457 (A) betrifft ein Rückhaltesystem für Fahrzeuginsassen mit einem Gaskissen und einem das Gaskissen füllenden Gasgenerator. Die Treibladung des Gasgenerators wird durch eine Zündladung gezündet. Die im Gasgenerator in einer Zündkammer angeordnete Zündladung wird durch einen direkt auf die Zündladung gerichteten Strahl eines außerhalb des Generators angeordneten Lasers aktiviert, wobei im Bedarfsfall der Strahl des Lasers durch eine Lochblende freigegeben wird. Im Einsatzfall, d.h. das System ist aktiviert, aber der Strahl des Lasers zündet die Zündladung noch nicht, schattet die durch eine Feder vorgespannte und von einer Verrastung in dieser Lage gehaltene Lochblende den Strahl des Lasers von der Zündladung ab. Bei einer derartigen Konstruktion ist jedoch eine hohe Anzahl von Bauteilen notwendig. Aus der gesamten Anzahl der Bauteile, die bis zur Zündung der Treibladung benötigt werden, ergibt sich eine lange Übertragungskette, wodurch die Ansprechzeit zwischen der Detektion des Ereignisses (Unfall) und dem Aufblasen des Gaskissens recht hoch ist. In der Anzahl der Bauteile ist ferner noch der Nachteil zu sehen, daß mit steigender Anzahl die Wahrscheinlichkeit steigt, daß ein Bauteil und damit das gesamte Rückhaltesystem ausfällt. Durch diesen Umstand ist stets ein hoher Aufwand zur Überprüfung dieser Bauteile notwendig.

Aus der US 50 10 822 ist es zur Strahlenführung eines ein pyrotechnisches System zündenden Lasers bekannt, transmitierende, reflektierende und fokussierende Bauteile zu verwenden. Durch die Einbringung dieser Bauteile muß der Stahl des außerhalb der Kammer des pyrotechnischen Systems angeordnete Laser keine geradlinige Verbindung mit der Zündkammer aufweisen. Dies kann in Einzelfällen den Einbau in begrenzte Räumlichkeiten erleichtern. Des weiteren ist hier ein Abschatten des Lasers im aktivierten Ruhefall erleichtert, da nur eins dieser Bauteile aus dem Strahlengang entfernt oder verändert werden muß.

US-A-3 362 329 zeigt eine in einer Zündkammer untergebrachte pyrotechnische Auslösevorrichtung, die eine Feststoff-Treibladung und eine Initial-Ladung, die über einen elektrisch aktivierbaren Halbleiter-Laser gezündet wird, aufweist, wobei der Laser innerhalb der Zündkammer angeordnet ist und wobei der bei einer Zündung erzeugte Laserstrahl direkt auf die Initial-Ladung gelenkt ist.

Die obenerwähnte Auslösevorrichtung ist relativ aufwendig, weil zwei Ladungen vorgesehen werden müssen.

Aus der DE 42 11 672 A1 ist ein Sicherheitsgurt für Fahrzeugsitze bekannt, der im Falle eines Unfalles ähnlich einem Schlauch aufgeblasen wird. Das für das Aufblasen notwendige Gasvolumen wird durch ein Abbrennen einer Treibladung erzeugt, die gleichmäßig über die Länge des Sicherheitsgurtes verteilt ist, wobei die Treibladung durch einen optischen Zündimpuls gezündet wird. Damit die Treibladung über die Länge des Gurtes ungefähr gleichzeitig abbrennt, wird der optisches Zündimpuls aufgeteilt und an mehreren Stellen des Gurtes gleichzeitig in die Treibladung eingekoppelt.

Die Aufgabe der Erfindung ist es, das gattungsgemäß zugrundegelegte Rückhaltesystem dahingehend weiterzuentwickeln, daß es bei einem möglichst geringen Bauraum mit möglichst wenigen, störanfälligen und Schaltzeit benötigenden Teilen zuverlässig aktivierbar ist.

Die Aufgabe wird erfindungsgemäß bei diesem Rückhaltesystem mit den kennzeichnenden Merkmalen des Anspruches 1 gelöst. Durch die Verwendung von Halbleiterlasern, deren Einbau in die Zündkammer des Generators und die direkte Einstrahlung der Strahlen der Halbleiterlaser zur Zündung der Treibladung, kann der Gasgenerator des Gaskissens bei geringerem Bauraum zuverlässiger hergestellt werden.

Weitere zweckmäßige Ausgestaltungen der Erfindung sind den Unteransprüchen entnehmbar. Im übrigen wird die Erfindung anhand von in den Zeichnungen dargestellten Ausführungsbeispielen im folgenden erläutert. Dabei zeigt
- Fig. 1: einen Schnitt durch einen Gasgenerator eines fahrerseitigen Rückhaltesystems mit Gaskissen und
- Fig. 2: einen Schnitt durch einen Gasgenerator eines beifahrerseitigen Rückhaltesystems mit Gaskissen.

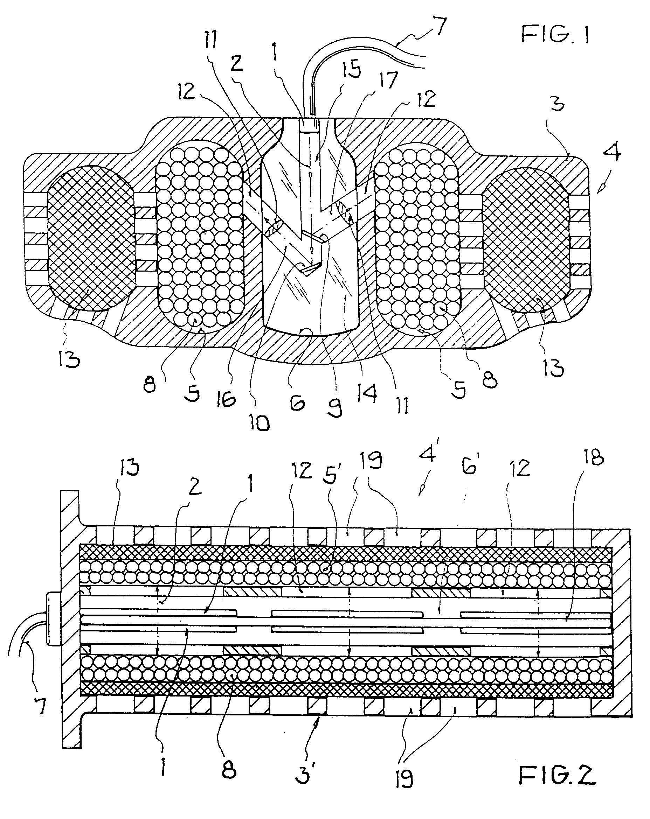

In Figur 1 ist ein Schnitt durch einen Gasgenerator 4 eines Rückhaltesystems für Fahrzeuginsassen dargestellt, der zur Füllung eines Gaskissen (nicht eingezeichnet) vorgesehen ist, wobei es sich bei diesem Typ um einen im Topf eines Lenkrades (nicht eingezeichnet) unterzubringenden, fahrerseitigen Gasgenerator 4 handelt. Der Gasgenerator 4 weist ein um seine Längsachse rotationssymmetrisches Gehäuse 3 auf, in dem, beginnend von innen nach außen, eine innere, zylindrische Zündkammer 6, innerhalb der ein Glaskörper 14 angeordnet ist, eine mittlere kreisringförmige Treibladungs-Kammer 5, die mit einer aus gepreßten Tabletten bestehenden Treibladung 8 gefüllt ist, und eine äußere, ebenfalls kreisringförmige Filter-Kammer, in der ein Stahlfilter 13 aus Stahlgewebe eingebracht ist, angeordnet ist. Der Laser 1 ist innerhalb der Zündkammer 6 im Bereich einer axialen Stirnseite des Gasgenerators 4 fluchtend zur Längsachse des Gasgenerators 4 angeordnet.

Die Betriebsspannung des günstigerweise als Halbleiterlaser ausgebildeten Lasers 1, im folgenden vereinfachend Laser 1 genannt, kann ohne größeren Aufwand von der Bordelektrik zur Verfügung gestellt werden. Moderne Halbleiterlaser weisen kurze Ansprechzeiten bis in den Pico-Sekundenbereich auf, so daß sie mit geringen Ansprechzeiten gepulst und damit mit einer hohen Leistung betrieben werden können. Durch die kurze Ansprechzeit und die hohe Pulsrate ist es möglich, innerhalb kurzer Zeiten eine extrem hohe Strahlungsdichte und eine hohe Temperatur zu erzeugen, wodurch eine hohe Wärmeeinwirkung auf die Tabletten der Treibladung 8 erfolgt. Da diese Laser 1 nur einen geringen Platzbedarf aufweisen, ist es vorteilhaft, mehrere derartige Laser 1 auf einer Matrix anzuordnen, und durch eine geeignete Optik ihr gesamtes Laserlicht zur Zündung zu fokussieren, um dadurch eine hohe Energiedichte bereitzustellen. Die betreffenden Laser 1 bieten dadurch noch zusätzlich den Vorteil, daß im Falle des Nichtgebrauchs gegenüber anderen Lasern keine zusätzlichen Maßnahmen zur Abschirmung der Treibladung 8 vor dem Strahl 2 des Lasers 1 getroffen werden müssen.

Innerhalb der Zündkammer 6 ist der Glaskörper 14 angeordnet, der mehrere Lichtleitbohrungen 15, 16 17 aufweist. In der gemeinsamen, entlang der Längsachse des vom Laser 1 kommenden Strahls 2 ausgerichteten Lichtleitbohrung 15 ist ein Strahlteiler 9 angeordnet, der etwa die Hälfte des Strahles 2 des Lasers 1 in die erste Lichtleitbohrung 17 umlenkt. Die erste Lichtleitbohrung 16 ist radial nach außen und geneigt zur Längsachse ausgerichtet und fluchtet mit einer die Strahlen-Durchtrittsöffnung 12 in der Wandung zwischen der Zündkammer 6 und der Treibladungs-Kammer 5. In der ersten Lichtleitbohrung 17 ist ein Linse 11 angeordnet, die den abgeteilten bzw. abgelenkten Teil des Strahles 2 nahezu punktförmig auf eine Stelle der aus Tabletten bestehenden Feststoff-Treibladung 8 fokussiert. Durch diese Fokussierung liegt an dem Ort des Auftreffens des Strahles 2 eine hohe punktuelle Strahlungsdichte vor, wodurch die Treibladung 8 gut gezündet werden kann. Der vom Strahlteiler 9 unbeeinflußte restliche Strahl 2 fällt auf einen am Ende der gemeinsamen Lichtleitbohrung 15 angeordneten und geneigt zur Längsachse ausgerichteten Spiegel 10, wobei der Spiegel 10, je nach Fertigungsaufwand, auch eine gegenüber der Längsachse geneigte verspiegelte Fläche sein kann. Durch diesen Spiegel 10 wird der verbleibende Strahl 2 in die zweite, ebenfalls radial nach außen und geneigt zur Längsachse ausgerichtete Lichtleitbohrung 16 umlenkt. In dieser zweiten Lichtleitbohrung 16 ist ebenfalls eine Linse 11 angeordnet, die den restlichen Strahl 2 durch eine weitere Strahlen-Durchtrittsöffnung 12 auf eine weitere Stelle der Treibladung 8 fokussiert, wobei diese Auftreffstelle auf ungefähr der gleichen axialen Höhe wie die des ersten, vom Strahlenteiler 9 abgelenkten Teil des Strahles 2 liegt. Durch diesen symmetrisch auf die Treibladung 8 verteilte Einstrahlung des Lasers 1 ergibt sich eine gute Durchzündung der Treibladung 8. Durch die direkte Leitung des/der Laserstrahles(en) auf die Treibladung 8 kann ferner auf eine chemische Zündladung verzichtet werden, wodurch gegenüber dem bisherigen Ablauf des Auslösens eines Gassacks eine Komponente eingespart ist. Außer dieser Einsparung ist auch zu beachten, daß dadurch auch die Ausfallwahrscheinlichkeit und die Störanfälligkeit des Rückhaltesystems verringert ist. Des weiteren ist der benötigte Bauraum kleiner und nach einer Zündung liegen weniger Reaktionsprodukte vor.

Nach einer weiteren, nicht dargestellten Ausführungsform, kann jeweils ein Laser 1 an gegenüberliegen Stirnseiten der Zündkammer 6 des Gasgenerators 4 angeordnet werden. Hierbei ist dann von Vorteil, daß die Lichtleitbohrungen im Glaskörper 14 einfacher hergestellt werden könnten, da auf den Strahlteiler 9 und damit auch auf dessen Befestigung in einer Lichtleitbohrung verzichtet werden kann. Des weiteren könnten dann in der Zündkammer 6 zusätzlich noch Tabletten der Treibladung 8 untergebracht werden.

In Figur 2 ist ein Schnitt durch einen Gasgenerator 4' eines beifahrerseitigen Rückhaltesystems dargestellt. Der Gasgenerator 4' weist die Form eines langen Kreiszylinders auf, wobei axial die Zündkammer 6' und radial außenliegend die Treibladungs-Kammer 5' angeordnet ist. Der Stahlfilter 13 ist bei diesem Gasgenerator 4*'* innerhalb der Treibladungs-Kammer 5' außen um die Tabletten der Treibladung 8 herum angeordnet, wobei zum Befüllen des Gaskissens am Umfang des Gehäuses 3' des Gasgenerators 4' Gasdurchtrittsöffnungen 19 angeordnet sind.

In der Zündkammer 6' ist entlang der Längsachse des zylindrischen Gehäuses 3' eine Platine 18 angeordnet, die mehrere darauf verteilt angeordnete Laser 1 (Halbleiterlaser) aufweist. Dadurch weist dieser Generator 3' ebenfalls keine Elemente außerhalb des Generators 3' auf und stellt eine kleine Baueinheit hoher Zuverlässigkeit dar. Des weiteren sind die vom Strahl 2 des Lasers 1 zurückzulegenden Wege kurz und dadurch, da hierbei nur eine vernachlässigbare Absorption auftritt, höchstens geringe Verluste der Laserleistung zu erwarten. Die einzelnen Laser 1 sind radial gegenüberliegend zu den Strahlen-Durchtrittsöffnungen 12 angeordnet, hinter denen in der Treibladungs-Kammer 5' die Tabletten der Feststoff-Treibladung 8 lagern. Gegebenenfalls kann auch hier zwischen den Lasern 1 und den Tabletten ein fokussierendes Element (nicht eingezeichnet), zur Erhöhung der punktuellen Strahlungsdichte eingebracht sein.

Vorsorgt und angesteuert werden die Laser 1 sinnvollerweise über auf der Platine 18 angeordnete elektrische Leiter, wobei diese über eine Leitung 7 mit der externen Stromversorgung des Fahrzeuges verbunden sind.

Die Funktion beider dargestellter Rückhaltesysteme ist prinzipiell miteinander vergleichbar, weshalb diese funktionalen gemeinsamen Zusammenhänge im folgenden kurz beschrieben werden. Wird das Fahrzeug in einen Unfall verwickelt, registriert der Aufprall-Sensor eine untolerierbare Beschleunigung, wodurch eine Logik die Auslösung des /der Rückhaltesysteme auslöst. Über die Versorgungsleitungen 7 wird der bzw. die Laser 1 zu einem gepulsten Betrieb angesteuert und emittieren nach der Ansprech- bzw. Anschwingzeit ihre Laserstrahlung. Der Strahl 2 des/der Laser(s) 1 wird entweder direkt oder indirekt in Richtung der Tabletten der Treibladung 8 geleitet, wobei die Laserstrahlung sinnvollerweise durch geeignete Fokussier-Vorrichtungen, wie Linsen oder dgl., möglichst punktförmig und symmetrisch bzgl. der Anordnung der Treibladung 8 auf diese gerichtet wird. Die Treibladung 8 wird über die Inertialtemperatur erhitzt und reagiert unter starker Gasbildung. Das Gas strömt durch das Gewebe des Stahlfilters 13 und das gefilterte Gas in das Gaskissen, das dadurch innerhalb von Millisekunden vollständig aufgeblasen wird.

## Patentansprüche

1. Rückhaltesystem für Fahrzeuginsassen mit einem Gaskissen und einem das Gaskissen füllenden, mit einer Feststoff-Treibladung bestückten Gasgenerator, sowie mit einer elektrisch aktivierbaren, als Laser ausgebildeten Zündvorrichtung zur Zündung der Feststoff-Treibladung,
**dadurch gekennzeichnet,**
daß der Laser (1) ein innerhalb einer Zündkammer (6,6') des Gasgenerators (4,4') angeordneter Halbleiterlaser ist, dessen Strahl (2) bei der Zündung direkt auf die gaserzeugende Feststoff-Treibladung (8) gerichtet oder gelenkt ist.

2. Rückhaltesystem nach Anspruch 1,
**dadurch gekennzeichnet,**
daß transmissive und/oder reflektive Elemente (9, 10, 11) zur Einleitung des Strahles (2) des Lasers (1) in eine mit der Feststoff-Treibladung (8) gefüllte Treibladungs-Kammer (5,5') angeordnet sind.

3. Rückhaltesystem nach Anspruch 1,
**dadurch gekennzeichnet,**
daß in dem Gehäuse (3,3') des Gasgenerators (4,4') eine Fokussier-Vorrichtung (11) angeordnet ist, mit der der Strahl (2) des Lasers (1) direkt auf die Treibladung (8) fokussierbar ist.

4. Rückhaltesystem nach Anspruch 1,
**dadurch gekennzeichnet,**
daß der Laser (1) aus mehreren nebeneinander in einer Matrix angeordneten Halbleiterlasern gebildet ist.

5. Rückhaltesystem nach Anspruch 1,
**dadurch gekennzeichnet,**
daß das Laserlicht, bezogen auf eine Symmetrieachse der Treibladung (8), symmetrisch verteilt auf diese einstrahlbar ist.

6. Rückhaltesystem nach Anspruch 1,
**dadurch gekennzeichnet,**
daß der Laser (1) gepulst betreibbar ist.

7. Rückhaltesystem nach Anspruch 1,
**dadurch gekennzeichnet,**
daß die Treibladung (8) mit einer den Strahl (2) des Lasers (1) zumindest teilweise absorbierenden Substanz beschichtet ist.

## Claims

1. A restraining system for persons in vehicles, comprising an air bag, a gas generator equipped with a solid propellant which fills the air bag, and an electrically activatable firing means in laser form for firing the solid propellant,
characterised in that
the laser (1) is a semi-conductor laser arranged inside a firing chamber (6, 6') of the gas generator (4, 4'), the beam of which is directed or concentrated directly on the gas-producing solid propellant (8) in the firing process.

2. A restraining system according to claim 1,
characterised in that
transmission and/or reflection members (9, 10, 11) are provided to guide the beam (2) of the laser (1) into a propellant chamber (5, 5') filled with the solid propellant (8).

3. A restraining system according to claim 1,
characterised in that
a focussing means (11) is arranged in the housing (3, 3') of the gas generator (4 4'), whereby the beam (2) of the laser (1) can be focused directly on the propellant (8).

4. A restraining system according to claim 1,
characterised in that
the laser (1) is formed by a plurality of semi-conductor lasers which are juxtaposed in a matrix.

5. A restraining system according to claim 1,
characterised in that
the laser light can be radiated onto the propellant (8), symmetrically distributed relative to an axis of symmetry of the propellant.

6. A restraining system according to claim 1,
characterised in that
the laser (1) may be operated with a pulsing action.

7. A restraining system according to claim 1,
characterised in that
the propellant (8) is coated with a substance which at least partially absorbs the beam (2) of the laser (1).

## Revendications

1. Système de retenue pour occupants de véhicules, comprenant un coussin d'air et un générateur de gaz destiné à remplir le coussin et muni d'une charge gonflante solide, ainsi que d'un dispositif d'amorçage, activable électriquement et réalisé sous la forme d'un laser, pour amorcer la charge gonflante solide, caractérisé en ce que le laser (1) est un laser à semi-conducteur disposé à l'intérieur d'une chambre d'amorçage (6, 6') du générateur de gaz (4, 4') et dont le rayon (2) est dirigé ou guidé directement, lors de l'amorçage, vers la charge gonflante solide (8) génératrice de gaz.

2. Système de retenue selon la revendication 1, caractérisé en ce que des éléments de transmission et/ou de rélfexion (9, 10, 11) sont prévus pour faire entrer le rayon (2) du laser (1) dans une chambre de charge gonflante (5, 5') remplie de la charge gonflante solide (8).

3. Système de retenue selon la revendication 1, caractérisé en ce que le boîtier (3, 3') du générateur de gaz (4, 4') contient un dispositif de focalisation (11) par lequel le rayon (2) du laser (1) peut être focalisé directement sur la charge gonflante (8).

4. Système de retenue selon la revendication 1, caractérisé en ce que le laser (1) est formé de plusieurs lasers à semi-conducteurs placés les uns à côté des autres dans une matrice.

5. Système de retenue selon la revendication 1, caractérisé en ce que la lumière laser est injectable dans la charge gonflante (8) avec une répartition symétrique par rapport à un axe de symétrie de cette charge.

6. Système de retenue selon la revendication 1, caractérisé en ce que le laser (1) est utilisable en régime pulsé.

7. Système de retenue selon la revendication 1, caractérisé en ce que la charge gonflante (8) est revêtue d'une substance absorbant en partie au moins le rayon (2) du laser (1).
